# EUROPEAN PATENT APPLICATION

(11) **EP 4 614 595 A1**
(43) Date of publication of application: **10.09.2025**
(21) Application number: 23926071.4
(22) Date of filing: 07.12.2023
(51) Int. Cl.: H01M 4/36, H01M 4/62, H01M 4/58, H01M 4/136, H01M 10/0525

(54) **MODIFIED POROUS LITHIUM IRON PHOSPHATE, PREPARATION METHOD THEREFOR AND USE THEREOF**

(30) Priority: 03.03.2023 CN 202310196547
(71) Applicant: Eve Power Co., Ltd., Jingmen, Hubei 448000 (CN)
(72) Inventor: XING, Xu, Jingmen, Hubei 448000 (CN); WEI, Haitao, Jingmen, Hubei 448000 (CN); GUI, Ke, Jingmen, Hubei 448000 (CN); ZHU, Weihua, Jingmen, Hubei 448000 (CN); WANG, Kai, Jingmen, Hubei 448000 (CN)
(74) Representative: Herrero & Asociados, S.L.
(86) International application number: PCT/CN2023/137293
(87) International publication number: WO 2024/183377

(57) **Abstract**

A modified porous lithium iron phosphate, a method for preparing the same, and an application of the same are disclosed. The method includes: mixing a porous iron phosphate precursor, a lithium source, a reducing agent, and lithium fluoride, followed by grinding treatment to obtain a ground mixture; pre-sintering the ground mixture to obtain a pre-sintered material; mixing the pre-sintered material with a carbon source, followed by calcination treatment to obtain a modified porous lithium iron phosphate cathode material.

## Description

The present application claims the priority of Chinese Patent Application No. 202310196547.2, filed to the China Patent Office on March 3, 2023, the disclosure of which is hereby incorporated by reference in their entireties into the present application.

### TECHNICAL FIELD

The present disclosure belongs to the technical field of lithium-ion batteries and relates to a modified porous lithium iron phosphate, a method for preparing the same, and an application of the same.

### BACKGROUND

There are many methods for improving surface carbon coating and particle morphology of LiFePO₄. For example, by doping ions to distort lattice and reduce polarization and charge transfer resistance, not only is electronic conductivity of LiFePO₄ improved, but diffusion of lithium ions is also promoted.

Doping ions within a LiFePO₄ lattice to replace Li, Fe, and O sites requires that doped metals match the lattice of LiFePO₄. In related arts, ions with ionic radii similar to those of target substitution sites are typically selected for doping. Fe-site doping involves replacing Fe with metal cations in a crystal structure, which weakens interaction of Li-O bonds. When substitutions with different valence states are used, ion vacancies or changes in ion valence states are generated, thereby increasing diffusion paths of lithium ions and improving ion mobility and diffusion coefficients.

In the related art, the lithium iron phosphate cathode materials have a problem of low Li⁺ diffusion coefficients, leading to poor electrochemical performance of the materials.

### TECHNICAL PROBLEM

The present disclosure provides a modified porous lithium iron phosphate, a method for preparing the modified porous lithium iron phosphate, and an application of the modified porous lithium iron phosphate. In the present disclosure, fluorine-oxygen site doping is directly performed using iron phosphate, producing a porous lithium iron phosphate with excellent electrochemical performance. The obtained material has advantages of good conductivity and high ion diffusion coefficient.

### TECHNICAL SOLUTION

In a first aspect, the present disclosure provides a method for preparing a modified porous lithium iron phosphate. The method includes the following steps:
mixing a porous iron phosphate precursor, a lithium source, a reducing agent, and lithium fluoride, followed by grinding treatment to obtain a ground mixture;
pre-sintering the ground mixture to obtain a pre-sintered material; and
mixing the pre-sintered material with a carbon source, followed by calcination treatment to obtain a modified porous lithium iron phosphate cathode material.

In a second aspect, the present disclosure provides a modified porous lithium iron phosphate, which is prepared by the method described in the first aspect.

In a third aspect, the present disclosure provides a cathode sheet, which includes the modified porous lithium iron phosphate described in the second aspect.

In a fourth aspect, the present disclosure provides a lithium-ion battery, which includes the cathode sheet described in the third aspect.

### BENEFICIAL EFFECTS

The present disclosure has the following beneficial effects.
(1) In the present disclosure, the porous iron phosphate precursor is adopted and oxygen-site fluorine doping is directly performed on the porous iron phosphate precursor during the preparation of lithium iron phosphate. A porous structure provides more stable diffusion channels for Li+, and the F doping increases an area of Li+ migration channels, resulting in a larger Li+ diffusion coefficient and improved electrochemical performance of a produced material.
(2) A LiFePO_{3.97}F_{0.03}/C composite material of the present disclosure retains a porous morphology, which is more conducive to coating of molten glucose and doping of F elements.

### BRIEF DESCRIPTION OF THE DRAWINGS

FIG. 1 is a flow chart of a method for preparing a modified porous lithium iron phosphate according to an embodiment of the present disclosure.
FIG. 2 is a SEM image of the modified porous lithium iron phosphate according to Example 1 of the present disclosure.
FIG. 3 is a cycling performance graph of the modified porous lithium iron phosphate according to Example 1 of the present disclosure.
FIG. 4 is a comparison graph of rate performance of the lithium iron phosphate cathode materials prepared in Example 1 and Comparative Example 1.
FIG. 5 is a graph showing a relationship between peak current (ip) and square root of scan rate (v^{1/2}) of lithium iron phosphate cathode materials prepared in Example 1 and Comparative Example 1.

### EMBODIMENTS OF THE PRESENT DISCLOSURE

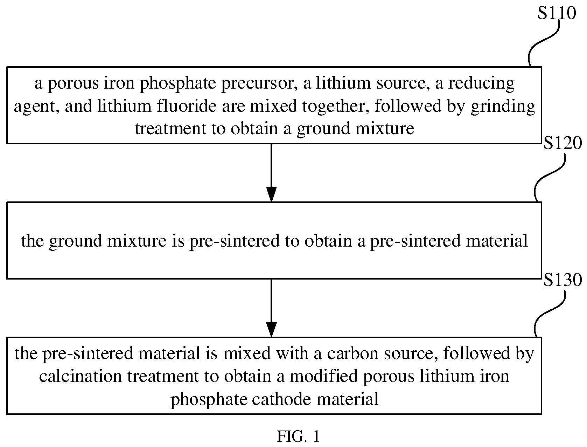

Referring to FIG. 1, a flow chart of a method for preparing a modified porous lithium iron phosphate according to an embodiment of the present disclosure is shown. The method for preparing the modified porous lithium iron phosphate includes the following operations S110.

In the operation S110, a porous iron phosphate precursor, a lithium source, a reducing agent, and lithium fluoride are mixed together, followed by grinding treatment to obtain a ground mixture.

In the operation S120, the ground mixture is pre-sintered to obtain a pre-sintered material.

In the operation S130, the pre-sintered material is mixed with a carbon source, followed by calcination treatment to obtain a modified porous lithium iron phosphate cathode material.

In the present disclosure, the porous iron phosphate precursor is adopted, and oxygen-site fluorine doping is directly performed on the porous iron phosphate precursor during preparation of lithium iron phosphate. A porous structure provides more stable diffusion channels for Li⁺, and F doping increases an area of Li⁺ migration channels, resulting in a larger Li⁺ diffusion coefficient and improved electrochemical performance of the material.

In the lithium iron phosphate of the present disclosure, F elements doped into lithium iron phosphate not only enhance electronic conductivity of carbon by altering an electronic structure of a carbon film formed by melting of glucose, but also promotes kinetics of Li⁺ intercalation/deintercalation in the carbon film by providing defects and vacancies, enhancing Li⁺ diffusion. Moreover, F doping modifies a microstructure of LiFePO₄ by weakening LiOFe bonds, thereby improving Li⁺ diffusion in LiFePO₄, enabling F-doped LiFePO₄ to exhibit stable cycling performance and high-rate capability.

A molar ratio of the lithium source to the porous iron phosphate precursor is in a range of 1.05-1.1:1, for example, 1.05:1, 1.06:1, 1.07:1, 1.08:1, 1.09:1, or 1.1:1.

The reducing agent includes ascorbic acid.

A mass of the reducing agent is 8%-12% of a total mass of the lithium source and the porous iron phosphate precursor, for example, 8%, 9%, 10%, 11%, or 12%.

A molar ratio of fluorine in lithium fluoride to oxygen in the porous iron phosphate precursor is (0.01-0.05):4, for example, 0.01:4, 0.02:4, 0.03:4, 0.04:4, or 0.05:4.

A grinding treatment duration is 20 min-40 min, for example, 20 min, 25 min, 30 min, 35 min, or 40 min.

A pre-sintering temperature is 300°C-400°C, for example, 300°C, 320°C, 350°C, 380°C, or 400°C.

A pre-sintering duration is 3 h-8 h, for example, 3 h, 4 h, 5 h, 6 h, 7 h, or 8 h.

A pre-sintering atmosphere includes argon.

The carbon source includes glucose.

A mass of the carbon source is 8%-12% of the total mass of the lithium source and the porous iron phosphate precursor, for example, 8%, 9%, 10%, 11%, or 12%.

A calcination temperature is 600°C-700°C, for example, 600°C, 620°C, 650°C, 680°C, or 700°C.

A calcination duration is 8 h-12 h, for example, 8 h, 9 h, 10 h, 11 h, or 12 h.

The present disclosure provides a modified porous lithium iron phosphate, which is prepared by the method described in the first aspect.

The present disclosure provides a cathode sheet, which includes the modified porous lithium iron phosphate described in the second aspect.

The present disclosure provides a lithium-ion battery, which includes the cathode sheet described in the third aspect.

### Example 1

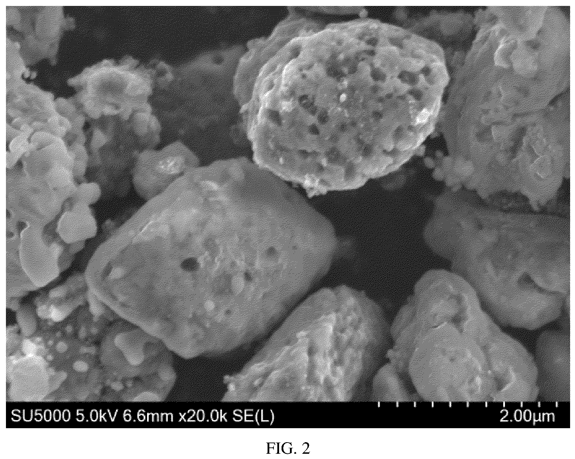

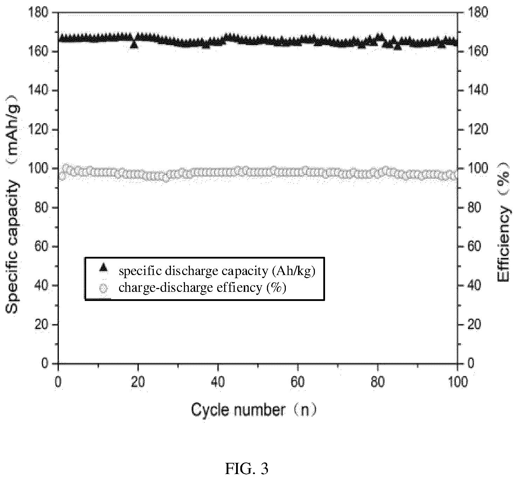

This example provides a modified porous lithium iron phosphate. A method for preparing the modified porous lithium iron phosphate is as follows.
(1) 0.5 g of porous FePO₄ precursor, 0.1391 g of LiOH·H₂O, and 0.06391 g of a reducing agent ascorbic acid (10 wt% of a total mass of LiOH·H₂O and porous FePO₄) were weighed in a molar ratio of Li:F:P = 1:1:1, and placed in an agate mortar. LiF (a molar ratio of F in LiF to O in FePO₄ is 0.03:3.97) was then added to the agate mortar, followed by grinding treatment for 30 min outside an infrared oven.
(2) The material obtained in step (1) was pre-sintered at 350°C for 5 h with a heating rate of 6°C/min to obtain a pre-sintered material.
(3) The pre-sintered material was mixed with 0.0639 g of glucose (10 wt% of the total mass of LiOH·H₂O and porous FePO₄), followed by grinding treatment for 20 min in the agate mortar, and then placed in a tube furnace under an argon atmosphere, followed by calcination treatment at 650°C for 10 h with a heating rate of 6°C/min to obtain the modified porous lithium iron phosphate. A chemical formula of the modified porous lithium iron phosphate is LiFePO_{3.97}F_{0.03}/C. The SEM image of the modified porous lithium iron phosphate is shown in FIG. 2. The cycling performance of the modified porous lithium iron phosphate is shown in FIG. 3.

### Example 2

This example provides a modified porous lithium iron phosphate. A method for preparing the modified porous lithium iron phosphate is as follows.
(1) 0.5 g of porous FePO₄ precursor, 0.1391 g of LiOH·H₂O, and 0.06391 g of a reducing agent ascorbic acid (10 wt% of a total mass of LiOH·H₂O and porous FePO₄) were weighed in a molar ratio of Li:F:P = 1:1:1, and placed in an agate mortar. LiF (a molar ratio of F in LiF to O in FePO4 is 0.04:3.96) was then added to the agate mortar, followed by grinding treatment for 30 min outside an infrared oven.
(2) The material obtained in step (1) was pre-sintered at 360°C for 5.2 h with a heating rate of 6°C/min to obtain a pre-sintered material.
(3) The pre-sintered material was mixed with 0.0639 g of glucose (10 wt% of the total mass of LiOH·H₂O and porous FePO₄), followed by grinding treatment for 20 min in the agate mortar, and then placed in a tube furnace under an argon atmosphere, followed by calcination treatment at 680°C for 9 h with a heating rate of 6°C/min to obtain the modified porous lithium iron phosphate. A chemical formula of the modified porous lithium iron phosphate is LiFePO_{3.96}F_{0.04}/C.

### Example 3

This example differs from Example 1 only in that the molar ratio of F in LiF to O in FePO₄ is 0.08:3.92. All other conditions and parameters are identical to those in Example 1.

### Example 4

This example differs from Example 1 only in that the molar ratio of F in LiF to O in FePO₄ is 0.005:3.995. All other conditions and parameters are identical to those in Example 1.

### Comparative Example 1

This comparative example differs from Example 1 only in that no fluorine doping is performed. All other conditions and parameters are identical to those in Example 1.

### Comparative Example 2

This comparative example differs from Example 1 only in that conventional iron phosphate is adopted instead of porous iron phosphate. All other conditions and parameters are identical to those in Example 1.

### Performance Testing

The lithium iron phosphate cathode materials provided in Examples 1-4 and Comparative Examples 1-2 were each mixed with Super P and PVDF at a mass ratio of 8:1:1 and an appropriate amount of NMP solvent to prepare an electrode slurry. The electrode slurry was uniformly coated on an aluminum foil and dried in a vacuum oven. The dried aluminum foil coated with the electrode slurry was made to a 12 mm diameter electrode sheet by a slicer, which were then assembled into a lithium half-cell in an argon-filled glove box. The lithium half-cell was then subjected to a 0.2C 100-cycle test and a 0.2C-10C rate test. The results are shown in Table 1.

**Table 1**

| | capacity retention after 100 cycles | 10C discharge capacity |
|---|---|---|
| Example 1 | 99.1% | 74.6 mAh/g |
| Example 2 | 98.8% | 69.5 mAh/g |
| Example 3 | 98.6% | 65.3 mAh/g |
| Example 4 | 98.4% | 66.2 mAh/g |
| Comparative Example 1 | 97.1% | 50.6 mAh/g |
| Comparative Example 2 | 97.3% | 58.6 mAh/g |

As shown in Table 1, it can be seen from Examples 1 and 2 that the modified porous lithium iron phosphate provided in the present disclosure exhibits a capacity retention rate of over 98.8% after 100 cycles and a 10C discharge capacity of over 69.5 mAh/g. By adjusting preparation parameters, the capacity retention rate after 100 cycles can exceed 99.1%, and the 10C discharge capacity can reach 74.5 mAh/g.

Comparing Example 1 with Examples 3-4, it is evident that during the preparation of the modified porous lithium iron phosphate, the molar ratio of F in lithium fluoride to O in the porous iron phosphate precursor affects performance of the modified porous lithium iron phosphate. When the molar ratio of F in lithium fluoride to O in the porous iron phosphate precursor is controlled within a range of (0.01-0.05):4, resulting modified porous lithium iron phosphate exhibits better performance. Excessive LiF addition leads to high F distribution on a surface, hindering L⁺ transport, while insufficient LiF addition limits doping effect and uniform F distribution.

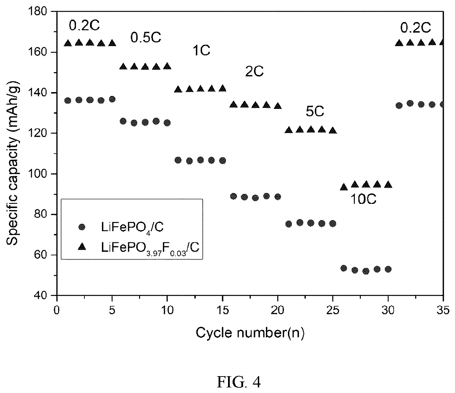

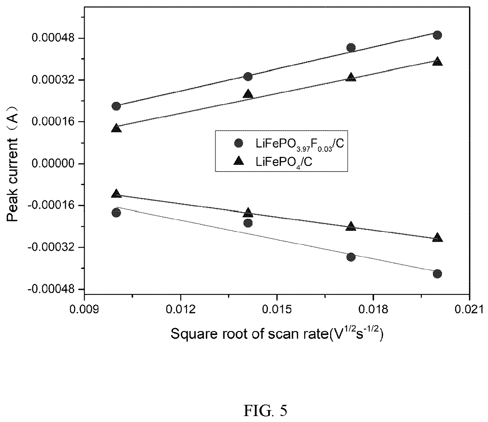

Rate performance comparison of the lithium iron phosphate cathode materials prepared in Example 1 and Comparative Example 1 is shown in FIG. 4. It can be seen from FIG. 4 that discharge capacities of the porous LiFePO_{3.97}F_{0.03}/C composite material under various rates are all higher than those of porous LiFePO₄/C. FIG. 5 shows a relationship between peak current (ip) and square root of scan rate (v^{1/2}) of lithium iron phosphate cathode materials prepared in Example 1 and Comparative Example 1. According to Randles-Sevcik equation (ip = 2.69 ×10⁵n³/²AC₀D^{1/2} v^{1/2}), a Li⁺ diffusion coefficient for oxidation reaction of the LiFePO_{3.97}F_{0.03}/C composite material is 1.63×10⁻¹¹ cm²/s, a Li⁺ diffusion coefficient for reduction reaction of the LiFePO_{3.97}F_{0.03}/C composite material is 1.261×10⁻¹¹ cm²/s, a Li⁺ diffusion coefficient for oxidation reaction of the LiFePO₄/C composite material is 1.329×10⁻¹¹ cm²/s, and a Li⁺ diffusion coefficient for reduction reaction of the of the LiFePO₄/C composite material is 6.037×10⁻¹¹ cm²/s. LiFePO_{3.97}F_{0.03}/C composite material exhibits superior Li⁺ diffusion coefficients in both oxidation and reduction peaks compared to the LiFePO₄/C composite material.

Comparing Example 1 with Comparative Example 2, it is clear that in the present disclosure, the porous iron phosphate precursor is adopted, and oxygen-site fluorine doping is directly performed on the porous iron phosphate precursor during the preparation of lithium iron phosphate. The porous structure provides more stable diffusion channels for Li⁺, and the F doping increases the area of Li⁺ migration channels, resulting in a larger Li⁺ diffusion coefficient and improved electrochemical performance of the obtained material.

## Claims

1. A method for preparing a modified porous lithium iron phosphate, comprising:
mixing a porous iron phosphate precursor, a lithium source, a reducing agent, and lithium fluoride, followed by grinding treatment to obtain a ground mixture;
pre-sintering the ground mixture to obtain a pre-sintered material; and
mixing a pre-sintered material with a carbon source, followed by calcination treatment to obtain a modified porous lithium iron phosphate cathode material.

2. The method as claimed in claim 1, wherein a molar ratio of the lithium source to the porous iron phosphate precursor is in a range of 1.05-1.1:1;
the reducing agent comprises ascorbic acid;
a mass of the reducing agent is 8%-12% of a total mass of the lithium source and the porous iron phosphate precursor.

3. The method as claimed in claim 1 or 2, wherein the molar ratio of fluorine in lithium fluoride to oxygen in the porous iron phosphate precursor is (0.01-0.05):4;
a grinding treatment duration is in a range of 20 min-40 min.

4. The method as claimed in any one of claims 1-3, wherein a pre-sintering temperature is in a range of 300°C-400°C;
a pre-sintering duration is in a range of 3 h-8 h;
a pre-sintering atmosphere comprises argon.

5. The method as claimed in any one of claims 1-4, wherein the carbon source comprises glucose;
a mass of the carbon source is 8%-12% of a total mass of the lithium source and the porous iron phosphate precursor.

6. The method as claimed in any one of claims 1-5, wherein a calcination temperature is in a range of 600°C-700°C;
a calcination duration is in a range of 8 h-12 h.

7. A modified porous lithium iron phosphate, wherein the modified porous lithium iron phosphate is prepared by the method as claimed in any one of claims 1-6.

8. The modified porous lithium iron phosphate as claimed in claim 7, wherein a chemical formula of the modified porous lithium iron phosphate is LiFePO₄₋ₓFₓ/C, where x is in a range of 0.01-0.05.

9. A cathode sheet, comprising the modified porous lithium iron phosphate as claimed in claim 7 or 8.

10. A lithium-ion battery, comprising the cathode sheet as claimed in claim 9.
